# EUROPÄISCHE PATENTANMELDUNG

(11) **EP 2 503 251 A2**
(43) Veröffentlichungstag der Anmeldung: **26.09.2012**
(21) Anmeldenummer: 12001005.3
(22) Anmeldetag: 16.02.2012
(51) Int. Cl.: F24D 11/02, F24D 3/08

(54) **Speicher-Wärmetauscher-Vorrichtung**

(30) Priorität: 21.03.2011 AT 3932011
(71) Anmelder: Egg, Robert, 6073 Sistrans (DE)
(72) Erfinder: Egg, Robert, 6073 Sistrans (DE)
(74) Vertreter: Gangl, Markus

(57) **Zusammenfassung**

Speicher-Wärmetauschervorrichtung (4) zum Austausch von Wärmeenergie zwischen einer Wärmepumpe, einem Sonnenkollektor (7), einem Heizungswasser-und einem Brauchwassersystem, wobei die Speicher-Wärmetauschervorrichtung (4)
- ein Kammersystem umfasst, wobei das Kammersystem mindestens einen Vorlauf (H2a, H2b, H2c) und einen Rücklauf (H1a, H1b, H1c) aufweist und aus mindestens zwei, insbesondere drei in Fluidkommunikation miteinander stehenden Kammern (5a, 5b, 5c) besteht, und
- drei voneinander unabhängige Rohrleitungs-Wärmetauscher (20a, 20b, 20c) aufweist, wobei mindestens zwei der Rohrleitungs-Wärmetauscher (20a, 20b, 20c) durch alle Kammern (5a, 5b, 5c) verlaufen.

## Beschreibung

Die Erfindung betrifft eine Speicher-Wärmetauschervorrichtung sowie ein Verfahren zum Austausch von Wärmeenergie zwischen einer Wärmepumpe, einem Sonnenkollektor, einem Heizungswasser- und einem Brauchwassersystem.

Es ist bekannt, dass für die Versorgung eines Gebäudes mit warmem Heizungs- und Brauchwasser unter Verwendung umweltfreundlicher Technologien, wie z.B. Wärmepumpen und/oder Sonnenkollektoren, eine Vielzahl unterschiedlicher Systembausteine zur Verfügung stehen. Nachteilig dabei ist, dass diese Systembausteine in der Regel aufwendig z.B. über mehrere gekoppelte Speichersysteme miteinander kombiniert werden müssen, wobei dabei nicht selten Energieverlusten auftreten. Gleichzeitig erhöht sich mit der Anzahl der Bausteine, die miteinander kombiniert werden, die Komplexität der Steuerung und/oder die Störanfälligkeit des Gesamtsystems. Derartige Lösungen sind z.B. aus der DE 10 2009 030 638 A1, der DE 100 04 180 A1, der US 2010/0038441 A1 und der DE 26 28 442 A1 bekannt.

Aufgabe der hier beschriebenen Erfindung ist es, die vorbeschriebenen Nachteile zu vermeiden und eine gegenüber dem Stand der Technik billige und energieeffiziente Gesamtlösung für eine Speicher-Wärmetauschervorrichtung bzw. ein billiges und energieeffizientes Verfahren zum Austausch von Wärmeenergie zwischen einer Wärmepumpe, einem Sonnenkollektor, einem Heizungswasser- und einem Brauchwassersystem bereitzustellen.

Diese Aufgabe wird erfindungsgemäß durch die Merkmale der beiden unabhängigen Patentansprüche 1 und 14 gelöst.

Unter dem Begriff Brauchwasser sei Wasser verstanden, das vor allem im sanitären Bereich z.B. für Waschtische, Duschen und/oder Wannenbäder verwendet. Das Heizungswasser kann beispielsweise für die Versorgung von Fußboden- und/oder Wandheizungen, Heizkörper, Lüftungsgeräte mit Lufterhitzern und/oder Deckenlufterhitzer vorgesehen sein. Bei der Wärmepumpe kann es sich z.B. um eine Luft- oder Kühfflüssigkeits-Wärmepumpe handeln. Die zugrunde liegenden Mechanismen derartiger Wärmepumpen werden weiter unten anhand der Figurenbeispiele näher erläutert.

In einer bevorzugten Ausführungsform der erfindungsgemäßen Speicher-Wärmetauschervorrichtung Ist das Kammersystem an das Heizungswassersystem anschließbar. In dem Kammersystem kann das Heizungswasser nicht nur erwärmt, sondern zusätzlich auch noch gespeichert werden.

Weiterhin ist es vorteilhaft, wenn einer der Rohleitungs-Wärmetauscher an die Wärmepumpe und/oder einer der Rohrleitungs-Wärmetauscher an den Sonnenkollektor und/oder einer der Rohrleitungs-Wärmetauscher an das Brauchwassersystem anschließbar ist. Vorzügsweise sind die hierfür bereitgestellten Anschlüsse an die Art des Mediums (z.B. Kältemittel, Solarflüssigkeit, Wasser), das durch den jeweiligen Rohrleitungs-Wärmetauscher im Betriebszustand strömen soll, angepasst.

Vorteilhafterweise sind die Kammern des Kammersystems in Gebrauchslage vertikal übereinander angeordnet oder weisen einen Winkel von (90°- α) zu der vertikalen Anordnung auf, wobei α vorzugsweise kleiner als 90° und gröBer als 35° ist. Auf diese Weise ist es besonders einfach möglich, verschiedene Temperaturniveaus des Wassers, das sich im Kammersystem befindet, zu erzeugen, da warmes Wasser eine geringere Dichte als kaltes Wasser hat und sich daher im oberen Bereich das Kammersystems ansammelt.

Das Merkmal, dass die Kammern des Kammersystems in Fluidkommunikation miteinander stehen, kann technisch beispielsweise durch Trennwände mit Öffnungen oder durch Rohrleitungen realisiert werden.

Im Hinblick auf einen besonders effizienten Austausch von Wärmeenergie zwischen den genannten Komponenten ist es vorteilhaft, wenn die Rohrleitungs-Wärmetauscher in den einzelnen Kammern spiral- oder schraubenförmig ausgebildet und vorzugsweise konzentrisch zueinander angeordnet sind. Für den Fall, dass beide Merkmale erfüllt sind, ist es aus fertigungstechnischen Gründen zudem günstig, wenn die Durchmesser der Spiral- bzw. Schraubenform der drei konzentrisch zueinander angeordneten Rohrleitungs-Wärmetauscher unterschiedlich groß sind, so dass sie einfach ineinander geschoben werden können.

Gemäß einer weiteren bevorzugten Ausführungsform der erfindungsgemäßen Speicher-Wärmetauschervorrichtung ist der Rohrleitungs-Wärmetauscher, der an das Brauchwassersystem anschließbar ist, zusätzlich über ein T-Stück an einen Zirkulationskreislauf anschließbar. Zirkulationskreisläufe sind in Fachkreisen allgemein bekannt und werden in nahezu jedem errichteten Gebäude eingebaut.

Aus Gründen einer besonders kompakten Bauweise, ist es vorteilhaft, wenn die Kammern des Kammersystems eine runde oder eine quadratische Querschnittsform aufweisen.

Um nicht unnötig Energie zu verlieren, ist es weiterhin vorteilhaft, wenn das Kammersystem zumindest bereichsweise mit einem handelsüblichen wärmeisolierenden Material ummantelt ist.

Als besonders vorteilhaft hat es sich herausgestellt, die Speicher-Wärmetauschervorrichtung in einer mobilen Wassertemperiereinheit zur Versorgung eines Gebäudes mit warmem Heizungs- und Brauchwasser zu verwenden. Mögliche Ausführungsformen und Wirkungsweisen einer solchen mobilen Wassertemperiereinheit werden weiter unten anhand der Figurenbeispiele im Detail erläutert.

Die hier beschriebene Erfindung sieht weiterhin ein Verfahren zum Austausch von Wärmeenergie zwischen einer Wärmepumpe, einem Sonnenkollektor, einem Heizungswasser- und einem Brauchwassersystem mit Hilfe der erfindungsgemäßen Speicher-Wärmetauschervorrichtung vor. Hierzu wird in einem ersten Verfahrensschritt das Kammersystem an das Heizungswassersystem, einer der Rohrleitungs-Wärmetauscher an den Sonnenkollektor, ein weiterer der Rohrleitungs-Wärmetauscher an das Brauchwassersystem und der letzte der Rohrleitungs-Wärmetauscher an die Wärmepumpe anschlossen. In einem zweiten Verfahrensschritt werden die beiden Rohrleitungs-Wärmetauscher, die an den Sonnenkollektor und das Brauchwassersystem angeschlossen sind, gegenläufig durchströmt, und es wird der Rohrleitungs-Wärmetauscher, der an die Wärmepumpe anschlossen ist, von einem Kältemittel durchströmt. Durch dieses Verfahren wird der Umwelt über den Sonnenkollektor und/oder die Wärmepumpe Wärmeenergie entzogen, der Speicher-Wärmetauschervorrichtung zugeführt und dort dazu verwendet, Heizungs- und Brauchwasser zu erwärmen.

Vorteilhafterweise nimmt das Wasser im Zuge der Durchführung dieses Verfahrens in den einzelnen Kammern unterschiedliche Temperaturen an, so dass je nach Art des zu versorgenden Heizungssystems Heizungswasser mit unterschiedlicher Temperatur dem Kammersystem entnommen werden kann. Sind die Kammern in Gebrauchslage außerdem noch vertikal übereinander angeordnet oder weisen einen Winkel von (90°-α) zu der vertikalen Anordnung auf, wobei α vorzugsweise kleiner als 90° und größer als 35° ist, so ist - im Falle eines Kammersystems mit genau drei Kammern - die Temperatur in der oberen Kammer am größten und die Temperatur in der unteren Kammer am kleinsten. Die Temperatur in der mittleren Kammer nimmt einen dazwischen liegenden Wert an. Besonders bevorzugt ist dabei, wenn die Temperatur in der oberen Kammer zwischen 35°C und 70°C und/oder die Temperatur in der mittleren Kammer zwischen 25°C und 50°C und/oder die Temperatur in der unteren Kammer zwischen 15°C und 40°C liegt.

Weitere Einzelheiten und Vorteile der vorliegenden Erfindung werden anhand der Figurenbeispiele unter Bezugnahme auf die in den Zeichnungen dargestellten Ausführungsbeispiele im Folgenden näher erläutert. Dabei zeigt:
- Fig. 1: ein zum Verständnis vereinfachtes Anlagenschema einer Ausführungsform der mobilen Wassertemperiereinheit,
- Fig. 2: das Anlagenschema aus Fig. 1, wobei zusätzliche Armaturen eingezeichnet sind,
- Fig. 3a: das Anlagenschema aus Fig. 1, wobei der Luft-Wärmepumpenprozess hervorgehoben ist,
- Fig. 3b: das Anlagenschema aus Fig. 1, wobei der Kühlflüssigkeits-Wärmepumpenprozess hervorgehoben ist,
- Fig.4: eine schematische Darstellung einer Querschnittsebene einer Ausführungsform der Speicher-Wärmetauschervorrichtung,
- Fig. 5: eine schematische Darstellung einer Querschnittsebene einer von der Fig. 4 abweichenden Ausführungsform der Speicher-Wärmetauschervorrichtung,
- Fig. 6a: eine schematische Darstellung einer im Vergleich zu den Fig. 4 und 5 um 90° gedrehten Querschnittsebene einer Ausführungsform der Speicher-Wärmetauschervorrichtung in einer ersten Gebrauchslage,
- Fig. 6b: eine schematische Darstellung einer im Vergleich zu den Fig. 4 und 5 um 90° gedrehten Querschnittsebene einer weiteren Ausführungsform der Speicher-Wärmetauschervorrichtung in einer zweiten Gebrauchslage,
- Fig. 7a: eine schematische Ansicht einer ersten Seite einer Ausführungsform der mobilen Wassertemperiereinheit,
- Fig. 7b: eine schematische Ansicht einer zweiten Seite der Ausführungsform der mobilen Wassertemperiereinheit aus Fig. 7a,
- Fig.8a: eine schematische Darstellung einer ersten Querschnittsebene einer Ausführungsform der mobilen Wassertemperiereinheit,
- Fig.8b: eine schematische Darstellung einer zweiten Querschnittsebene der Ausführungsform der mobilen Wassertemperiereinheit aus Fig. 8b,
- Fig. 9a: eine schematische Darstellung der Ansicht, die sich durch Herabschauen von einer ersten Betrachtungsebene auf die Ausführungsform der mobilen Wassertemperiereinheit aus den Fig. 8a bzw. 8b ergibt und
- Fig. 9b: eine schematische Darstellung der Ansicht, die sich durch Herabschauen von einer zweiten Betrachtungsebene auf die Ausführungsform der mobilen Wassertemperiereinheit aus den Fig. 8a, 8b bzw. 9a ergibt.

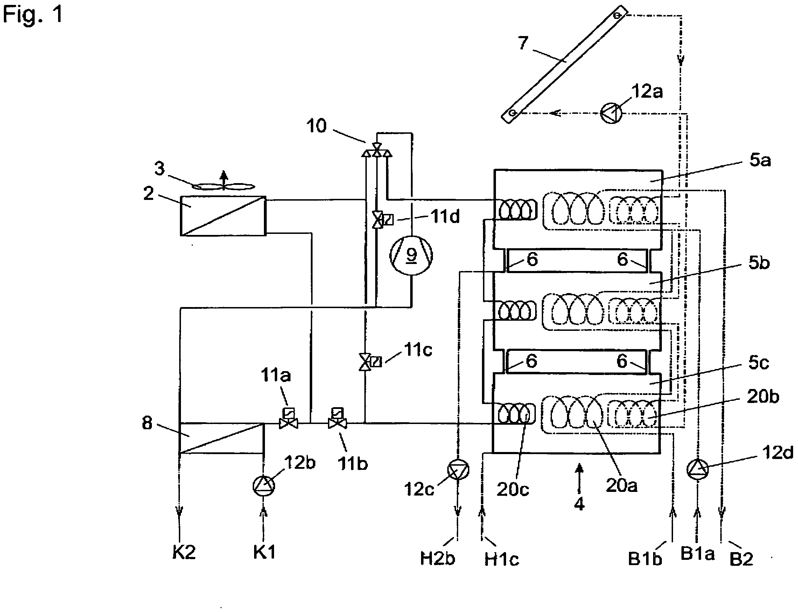

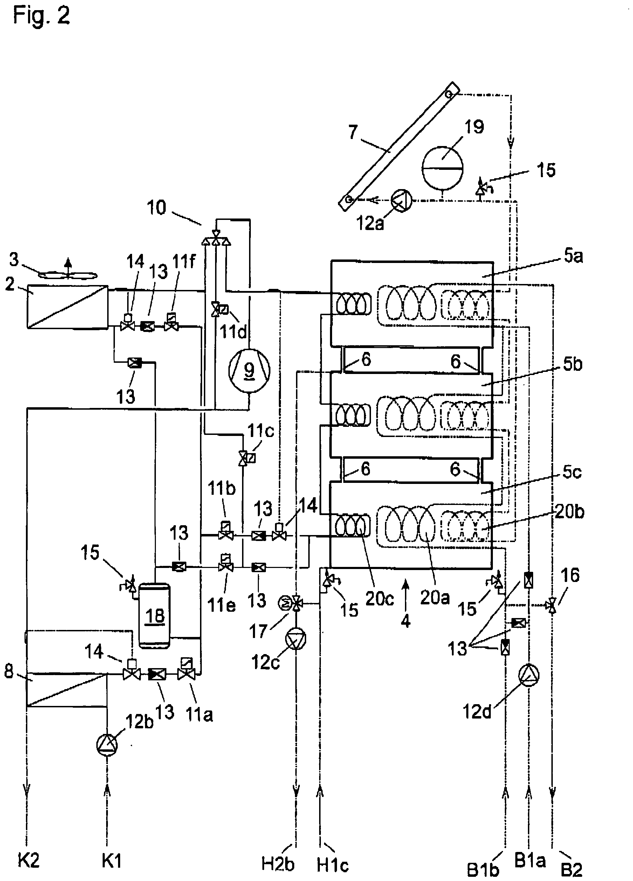

In den Fig. 1 und 2 ist ein Anlagenschema einer Ausführungsform der mobilen Wassertemperiereinheit dargestellt. Der Übersichtlichkeit halber wurden in der Fig. 1 Armaturen, die von einem durchschnittlichen Fachmann üblicherweise, z.B. zur Erhöhung der Sicherheit, verwendet werden und nicht für das Verständnis des grundlegenden Wirkungsprinzips wichtig sind, weggelassen. Die Wassertemperiereinheit umfasst in der dargestellten Ausführungsform
● einen Luftwärmetauscher 2, eine Gebläsevorrichtung 3 und einen Verdichter 9,
● eine Speicher-Wärmetauschervorrichtung 4 zur Erwärmung und Speicherung von Heizungswasser,
● einen Sonnenkollektor 7, der mit einem Wärmetauscher 20b in Form eines Rohrleitungs-Wärmetauschers verbunden ist, wobei der Wärmetauscher 20b in die Speicher-Wärmetauschervorrichtung 4 integriert ist,
● einen zusätzlichen Wärmetauscher 20a, der ebenfalls in Form eines Rohrleiturigs-Wärmetauschers ausgebildet ist und in die Speicher-Wärmetauschervorrichtung 4 integriert ist und der Erwärmung von Brauchwasser dient und
● einen zusätzlichen Wärmetauscher 8 zur Erniedrigung der Temperatur einer Kühlflüssigkeit, wobei sich für diesen Wärmetauscher 8 beispielsweise Platten-, Rohr- oder Doppelrohrwärmetauscher eignen.

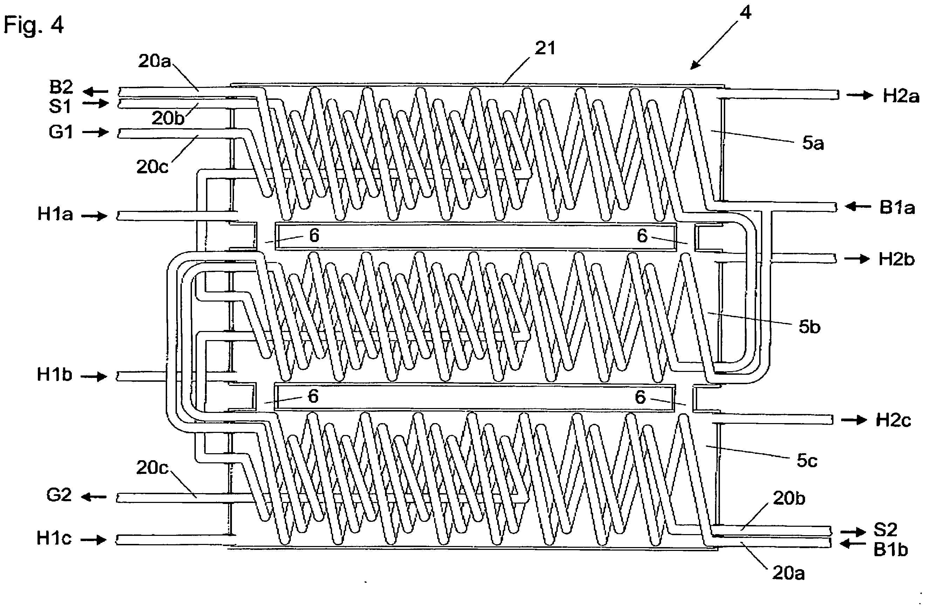

Es sei angemerkt, dass die Wirkungsweise der Speicher-Wärmetauschervorrichtung 4 anhand der Fig. 4, 5, 6a und 6b näher erläutert wird. An dieser Stelle ist es wichtig festzuhalten, dass in der gezeigten Ausführungsform der mobilen Wassertemperiereinheit fünf "Kreisläufe" eine Rolle spielen:
1. ein Kühlflüssigkeitskreislauf mit einem Vorlauf K2, einem Rücklauf K1 und einer Umwälzpumpe 12b,
2. ein Heizungswasserkreislauf mit einem Vorlauf H2b, einem Rücklauf H1c und einer Umwälzpumpe 12c, wobei das Heizungswasser in der Wärmetauschervorrichtung 4 erwärmt und zwischengespeichert wird,
3. ein Brauchwasserkreislauf, der eine Kaltwasserzufuhr B1b, einen Warmwasseraustritt B2 sowie einen Anschluss B1a und eine Umwälzpumpe 12d zur Realisierung eines Zirkulationskreislaufes umfasst,
4. ein Solarflüssigkeitskreislauf mit einem Vor- und einem Rücklauf sowie einer Umwälzpumpe 12a und schließlich
5. ein Kältemittelkreislauf, welcher einerseits für die Realisierung eines Luft- und andererseits für die Realisierung eines Kühlflüssigkeits-Wärmepumpenprozesses notwendig ist. Bei dem Luft-Wärmepumpenprozess wird der Umgebungsluft Wärmeenergie entzogen, diese Wärmeenergie auf das Kältemittel übertragen, das Kältemittel anschließend mittels des Verdichters 9 komprimiert und dabei weiter erwärmt und die Wärmeenergie schließlich an das Heizungs- bzw. Brauchwasser abgegeben. Bei dem Kühlfüssigkeits-Wärmepumpenprozess wird der Kühlflüssigkeit Wärmeenergie entzogen, die Wärmeenergie wiederum auf das Kältemittel übertragen, das Kältemittel anschließend mittels des Verdichters 9 komprimiert und dabei weiter erwärmt und die Wärmeenergie schließlich an das Heizungs- bzw. Brauchwasser abgegeben. Die eingezeichneten Durchgangsventile 11a bis 11d sowie das 4-Wege-Ventil 10 werden dazu verwendet, zwischen den beiden Wärmepumpenprozessen hin- und herzuschalten.

In der Fig. 2 ist das Anlagenschema aus Fig. 1 dargestellt, wobei zusätzliche Armaturen eingezeichnet sind, die für einen störungsfreien Betrieb einer derartigen Anlage üblicherweise zum Einsatz kommen. Dazu zählen:
● im Heizungswasserkreislauf ein 3-Wege-Mischventil 17 zur Erzielung einer vorgegebenen Temperatur, die das Heizungswasser aufweisen soll, sowie ein Sicherheitsventil 15,
● im Brauchwasserkreislauf mehrere Rückschlagventile 13, ein Sicherheitsventil 15 und ein Thermomischer 16, mit dessen Hilfe sich die Temperatur des Warmwassers abstimmen lässt,
● im Solarflüssigkeitskreislauf ein Sicherheitsventil 15 und ein Ausdehnungsgefäß 19 und
● im Kältemittelkreislauf vor allem ein zusätzlicher Kältemittelsammler 18 mit den erforderlichen Rohrverbindungen und Sicherheitsarmaturen sowie weitere Durchgangs-, Rückschlag- und Exparisionsventile.

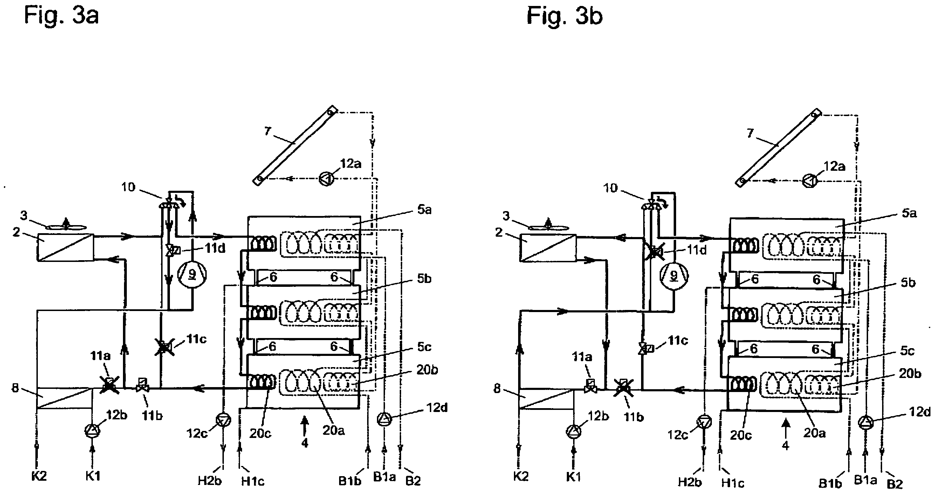

In den Fig. 3a und 3b ist das Anlagenschema aus Fig. 1 dargestellt, wobei die beiden weiter oben beschriebenen Wärmepumpenprozesse mit Hilfe von dicken Linien, Pfeilen, welche die Fließrichtung des Kältemittels andeuten sollen, und durchgestrichenen Durchgangsventilen zur Veranschaulichung der Tatsache, dass die betreffenden Ventile im jeweiligen Betriebszustand gesperrt sind, angedeutet sind. Eine wichtige Rolle nimmt in diesem Zusammenhang auch das 4-Wege-Ventil 10 ein. Fig. 3a zeigt den Luft-Wärmepumpenprozess und Fig. 3b den Kühlflüssigkeits-Wärmepumpenprozess. Es sei darauf hingewiesen, dass sich im zweiten Fall überschüssige Wärmeenergie, die nicht an das Heizungs- bzw. Brauchwasser abgegeben werden kann, über den Luftwärmetauscher an die Umgebungsluft abführen lässt.

Fig. 4 zeigt eine schematische Darstellung einer Querschnittsebene einer Ausführungsform der Speicher-Wärmetauschervorrichtung 4, die ein Kammersystem umfasst. Das Kammersystem, das von Heizungswasser durchströmt bzw. in dem Heizungswasser gespeichert wird, weist in der gezeigten Ausführungsform mehrere Vorläufe H2a, H2b und H2c und Rückläufe H1a, H1b und H1c auf und besteht in diesem Fall aus drei durch Rohrleitungen 6 in Fluidkommunikation miteinander stehenden Kammern 5a, 5b und 5c. Die Übertragung von Wärmeenergie auf das Wasser in der Speicher-Wärmetauschervorrichtung 4 erfolgt mittels eines Kältemittels, das durch den Rohrleitungs.Wärmetauscher 20c strömt, wobei mit G1 der Kältemittel-Eintritt und mit G2 der Kältemittel-Austritt bezeichnet ist. Der Rohrleitungs-Wärmetauscher 20a dient der Erwärmung von Brauchwasser, wobei das kalte Wasser über den Anschluss B1b der Speicher-Wärmetauschervorrichtung 4 zugeführt und das erwärmte Wasser über den Anschluss B2 wieder entnommen wird. Es sei angemerkt, dass dieser Rohrleitungs-Wärmetauscher 20a über ein T-Stück und den Anschluss B1a zusätzlich an einen Zirkulationskreislauf, der in nahezu jedem errichteten Gebäude vorgesehen ist, anschließbar ist. Der dritte Rohrleitungs-Wärmetauscher 20b ist für den Anschluss an einen Sonnenkollektor vorgesehen und wird von einer Solarflüssigkeit durchströmt. Dabei stellt S1 den Rück- und S2 den Vorlauf dar. Es sel noch darauf hingewiesen, dass die Wandungen 21 des Kammersystems vorteilhafterweise aus Stahl oder Edelstahl bestehen und dass die Rohrleitungs-Wärmetauscher 20a, 20b und 20c aus dem Bedarf angepassten Werkstoffen (wie z.B. Kupfer, Edelstahl, Stahl, Kunststoff-Aluminium-Mehrschichtverbundstoffe) angefertigt und entweder als Glatt-, Weil- oder Rippenrohre ausgebildet sind. Es sei darauf hingewiesen, dass die Speicher-Wärmetauschervorrichtung 4 auch dann funktionieren würde, wenn das Kammersystem lediglich zwei Kammern umschlösse.

Wichtig für einen effizienten Austausch der Wärmeenergie zwischen dem jeweiligen Wärmepumpenprozess, dem Sonnenkollektor, dem Heizungswasser- und dem Brauchwassersystem ist, dass wenigstens die beiden Rohrleitungs-Wärmetauscher 20a und 20b, die an den Sonnenkollektor und das Brauchwassersystem angeschlossen werden, durch alle Kammern 5a, 5b und 5c verlaufen. Für den Rohrleitungs-Wärmetauschers 20c ist dies vorzugsweise auch der Fall, es würde aber auch reichen, wenn dieser Rohrleitungs-Wärmetauscher 20c z.B. nur durch die obere Kammer 5a und die untere Kammer 5c verläuft. Vorteilhafterweise sind die Rohrleitungs-Wärmetauscher 20a, 20b und 20c des Weiteren auch noch spiral- oder (wie hier dargestellt) schraubenförmig ausgebildet und konzentrisch zueinander angeordnet. Aus fertigungstechnischen Gründen ist es zudem günstig, wenn die Durchmesser der Spiral- bzw. Schraubenform der drei konzentrisch zueinander angeordneten Rohrleitungs-Wärmetauscher 20a, 20b und 20c unterschiedlich groß sind, so dass sie einfach ineinander geschoben werden können. Als besonders vorteilhaft hat es sich schließlich herausgestellt, wenn die beiden Rohrleitungs-Wärmetauscher 20a und 20b gegenläufig durchströmt werden.

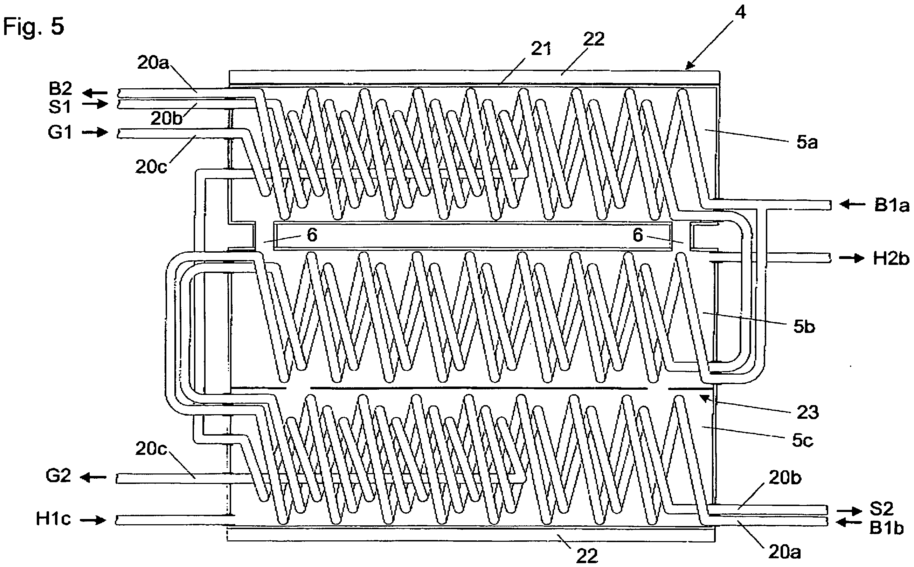

Fig. 5 zeigt eine schematische Darstellung einer Querschnittsebene einer von der Fig. 4 abweichenden Ausführungsform der Speicher-Wärmetauschervorrichtung 4. Die Unterschiede bestehen darin, dass
● die beiden Kammern 5b und 5c durch eine Trennwand 23 mit Öffnungen voneinander abgegrenzt sind, wohingegen die beiden Kammern 5a und 5b räumlich voneinander getrennt sind und durch Rohrleitungen 6 in Fluidkommunikation miteinander stehen,
● das Kammersystem nur einen Vorlauf H2b und einen Rücklauf H1c aufweist,
● das Kammersystem zumindest bereichsweise mit einem (handelsüblichen) wärmeisolierenden Material 22 ummantelt ist und
● der Rohrleitungs-Wärmetauscher 20c nur durch zwei der drei Kammern 5a, 5b und 5c verläuft.

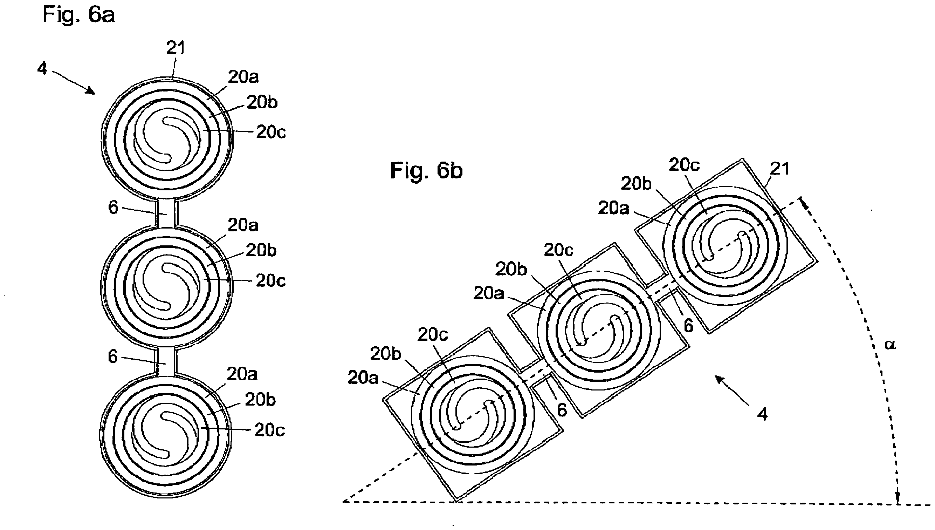

Durch die mehrstufige Ausgestaltung der Speicher-Wärmetauschervorrichtung 4 in Form von mehreren Kammern 5a, 5b und 5c ist es möglich, verschiedene Temperaturniveaus des Heizungswassers zu erzeugen. Dieser Effekt kann dadurch verstärkt werden, dass die Kammern 5a, 5b und 5c in der Gebrauchslage vertikal übereinander angeordnet sind oder einen Winkel von (90°- α) zu der vertikalen Anordnung aufweisen, wobei **α** vorzugsweise kleiner als 90° und größer als 35° ist. Aufgrund der Tatsache, dass warmes Wasser eine geringere Dichte als kaltes Wasser hat, wird sich das warme Heizungswasser nämlich automatisch eher im oberen und das kalte Heizungswasser eher im unteren Bereich des Kammersystems ansammeln. Je nachdem, welche Art von Heizungssystem versorgt werden soll - und damit verknüpft ist die Frage, wie hoch die erforderliche Temperatur des Heizungswassers sein muss - können die Vor- und Rückläufe an unterschiedlichen Stellen des Kammersystems vorgesehen sein. In einem Kammersystem, das aus drei Kammern 5a, 5b und 5c besteht, liegt die Temperatur des Heizungswassers in der oberen Kammer 5a typischerweise zwischen 35°C und 70°C, in der mittleren Kammer 5b zwischen 25°C und 50°C und in der unteren Kammer 5c zwischen 15°C und 40°C. In den Fig. 6a und 6b sind zwei bevorzugte Gebrauchslagen des Kammersystems dargestellt, wobei es sich jeweils um eine schematische Darstellung einer im Vergleich zu den Fig. 4 und 5 um 90° gedrehten Querschnittsebene einer Ausführungsform der Speicher-Wärmetauschervorrichtung 4 handelt. Nebenbei sei angemerkt, dass - wie hier zu sehen - die Kammern 5a, 5b und 5c z.B. eine runde oder eine quadratische Querschnittsform aufweisen können.

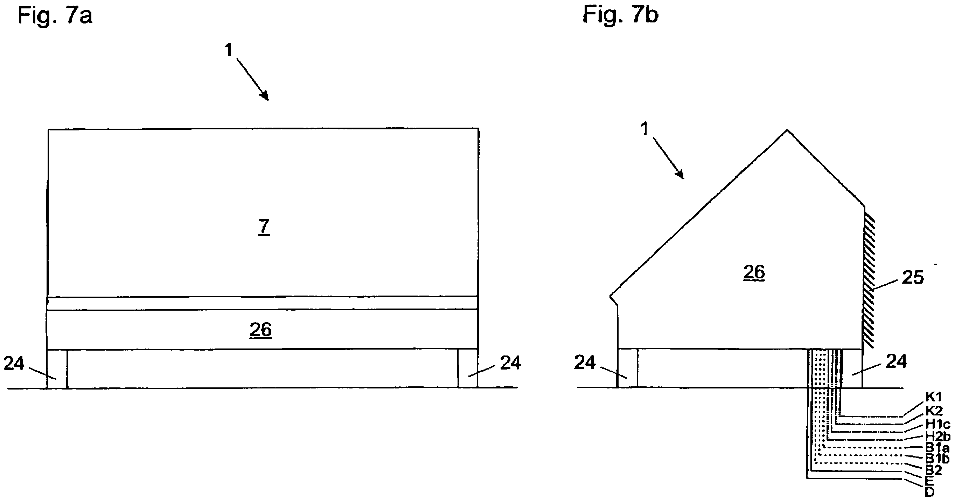

Die Fig. 7a, 7b, 8a, 8b, 9a und 9b dienen der Veranschaulichung bevorzugter Bauformen der mobilen Wassertemperiereinheit 1. Die dargestellten Bauformen zeichnen sich im Wesentlichen durch zwei Vorteile aus: ihre Kompaktheit und ihre Gewichtsoptimierung. Zur Gewichtsoptimierung tragen vor allem die Tatsachen bei, dass das Gehäuse zum einen aus einer Rahmenkonstruktion, die mit Verkleidungsblechen 26 umhüllt ist, besteht und dass zum anderen der Sonnenkollektor 7 eine Wand des Gehäuses bildet. Die Kompaktheit wird vor allem durch die spezielle Anordnung der einzelnen Komponenten im Inneren der Wassertemperiereinheit 1 erzielt.

Im Einzelnen zeigen die Fig. 7a und 7b schematisch zwei verschiedene Seitenansichten einer Ausführungsform der mobilen Wassertemperiereinheit 1, wobei insbesondere deutlich wird, dass der Sonnenkollektor 7 vorteilhafterweise eine rechteckige Grundfläche aufweist und quer an der Wassertemperiereinheit 1 angeordnet ist, dass die Wassertemperiereinheit 1 Abstandshalter 24 zum Untergrund und seitliche Luftdurchlässe 25 z.B. in Form eines Lamellengitters umfasst und dass die Wassertemperiereinheit 1 neben den bereits angesprochenen notwendigen Wasserleitungen K1, K2, usw. auch noch über eine elektrische Leitung E (vorzugsweise eine 400V- oder eine 230V-Leitung) und eine Datenleitung D mit dem zu klimatisierenden Gebäude verbunden ist.

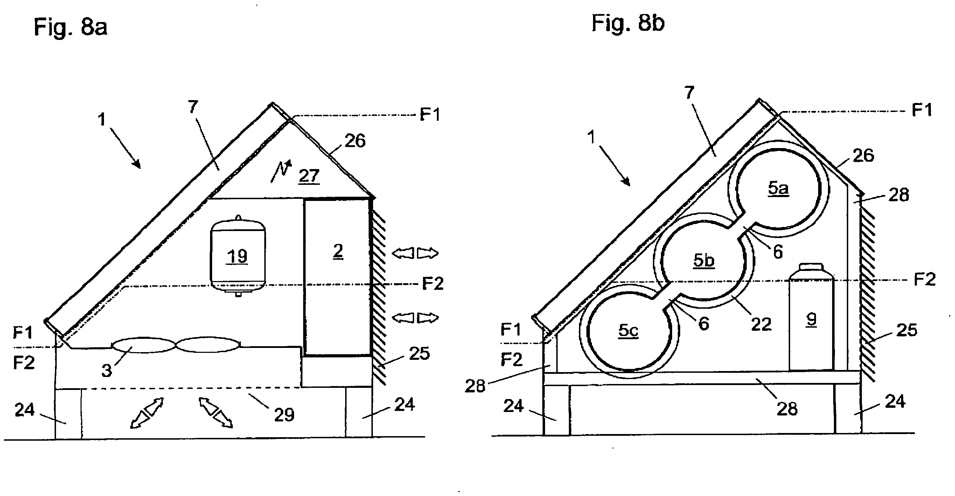

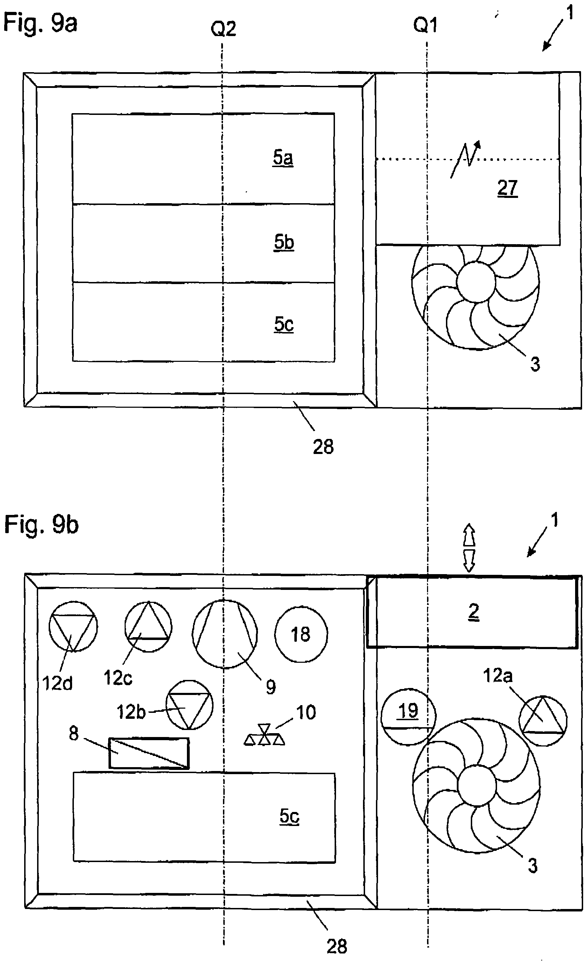

In den Fig. 8a und 8b sind schematisch zwei Querschnittsebenen einer Ausführungsform der mobilen Wassertemperiereinheit 1 dargestellt, wobei hier - wie auch in den Fig. 9a und 9b - der Übersichtlichkeit entgegenstehende Details, wie z.B. Verbindungsleitungen zwischen den einzelnen Komponenten oder die Rohrleiftungs-Wärmetauscher 20a, 20b und 20c bewusst weggelassen wurden. Bei der Fig. 8a sei das Augenmerk vor allem auf den Luftwärmetauscher 2, die Gebläsevorrichtung 3 und die unterseitigen Luftdurchlässe 29 (z.B. in Form eines einfachen Gitters) gerichtet. Durch Pfeile ist die Luftführung, die dadurch ermöglicht wird, angedeutet: die Luft strömt z.B. seitlich in das Gehäuse ein, danach über den Luftwärmetauscher 2 und wird schließlich wieder unterseitig über die durch die Abstandshalter 24 zum Untergrund entstehenden Öffnungen an die Umwelt abgegeben. In der Fig. 8a ist ebenfalls eine Steuereinrichtung 27 angedeutet, welche die Versorgung der mobilen Wassertemperiereinheit 1 mit elektrischer Energie überwacht und steuert und welche alle erforderlichen Prozesse, die im Inneren der Einheit 1 ablaufen, regelt. Vorteilhafterweise ist diese Steuereinheit 27 - vorzugsweise über ein Bus-System und die angesprochene Datenleitung D - an das Internet angeschlossen und die gesamte Wassertemperiereinheit 1 auf diese Wiese über das Internet fernbedienbar. In der Fig. 8b ist hauptsächlich die Anordnung der Speicher-Wärmetauschervorrichtung 4 sowie des Verdichters 9 erkennbar. Mit dem Bezugszeichen 28 sind (handelsübliche) Materialien gekennzeichnet, die wärme- und/oder schallisolierende Eigenschaften haben und mit denen die Wassertemperiereinheit 1 zumindest bereichsweise ausgekleidet ist.

Die Fig. 9a und 9b zeigen schematische Darstellungen der Ansichten, die sich durch Herabschauen von den in den Fig. 8a und 8b eingezeichneten Betrachtungsebenen F1 und F2 ergeben. Des Weiteren sind in den Fig. 9a und 9b die beiden in den Fig. 8a und 8b dargestellten und mit Q1 und Q2 bezeichneten Querschnittsebenen eingezeichnet.

### Bezugszeichenliste:

| | | | |
|---|---|---|---|
| 1 | Mobile Wassertemperiereinheit | H1 a-c | Heizungswasser-Rücklauf |
| 2 | Luftwärmetauscher | H2 a-c | Heizungswasser-Vorlauf |
| 3 | Gebläsevorrichtung | α | Neigungswinkel der Kammern |
| 4 | Speicher- | K1 | Kühlflüssigkeits-Rücklauf |
| | Wärmetauschervorrichtung | | |
| 5 a-c | Kammern | K2 | Kühlflüssigkeits-Vorlauf |
| 6 | Rohrleitungen | B1a | Rücklauf des Brauchwasser- |
| | | | Zirkulationskreislaufs |
| 7 | Sonnenkollektor | B1b | Brauchwasser-Eintritt |
| 8 | Wärmetauscher | für B2 | Brauchwasser-Austritt |
| | Kühlflüssigkeit | | |
| 9 | Verdichter | S1 | Solarflüssigkeits-Rücklauf |
| 10 | 4-Wege-Ventil | S2 | Solarflüssigkeits-Vorlauf |
| 11 a-f | Durchgangsventile | G1 | Kältemittel-Eintritt |
| 12 a-d | Umwälzpumpen | G2 | Kältemittel-Austritt |
| 13 | Rückschlagventile | E | Elektrizitätsversorgung (400V oder 230V) |
| 14 | Expansionsventile | D | Datenleitung |
| 15 | Sicherheitsventile | F1, F2 | Betrachtungsebenen |
| 16 | Thermomischer | Q1, Q2 | Querschnittsebenen |
| 17 | 3-Wege-Mischventil | | |
| 18 | Kältemittelsammler | | |
| 19 | Ausdehnungsgefäß | | |
| 20 a-c | Rohrleitungs-Wärmetauscher | | |
| 21 | Kammerwandungen | | |
| 22 | Wärmeisolationsmaterial | | |
| 23 | Trennwand mit Öffnungen | | |
| 24 | Abstandshalter zum Untergrund | | |
| 25 | Seitliche Luftdurchlässe | | |
| 26 | Verkleidungsbleche | | |
| 27 | Steuereinrichtung | | |
| 28 | Material zur Wärme- und/oder | | |
| | Schallisolierung | | |
| 29 | Unterseitige Luftdurchlässe | | |

## Patentansprüche

1. Speicher-Wärmetauschervorrichtung (4) zum Austausch von Wärmeenergie zwischen einer Wärmepumpe, einem Sonnenkollektor (7), einem Heizungswasser- und einem Brauchwassersystem, **dadurch gekennzeichnet, dass** die Speicher-Wärmetauschervorrichtung (4)
- ein Kammersystem umfasst, wobei das Kammersystem mindestens einen Vorlauf (H2a, H2b, H2c) und einen Rücklauf (H1a, H1b, H1c) aufweist und aus mindestens zwei, insbesondere drei in Fluidkommunikation miteinander stehenden Kammern (5a, 5b, 5c) besteht, und
- drei voneinander unabhängige Rohrleitungs-Wärmetauscher (20a, 20b, 20c) aufweist, wobei mindestens zwei der Rohrleitungs-Wärmetauscher (20a, 20b, 20c) durch alle Kammern (5a, 5b, 5c) verlaufen.

2. Speicher-Wärmetauschervorrichtung (4) nach Anspruch 1, **dadurch gekennzeichnet, dass** das Kammersystem an das Heizungswassersystem anschließbar ist.

3. Speicher-Wärmetauschervorrichtung (4) nach Anspruch 1 oder 2, **dadurch gekennzeichnet, dass** einer der Rohrleitungs-Wärmetauscher (20a, 20b, 20c) an die Wärmepumpe anschließbar ist.

4. Speicher-Wärmetauschervorrichtung (4) nach einem der Ansprüche 1 bis 3, **dadurch gekennzeichnet, dass** einer der Rohrleitungs-Wärmetauscher (20a, 20b, 20c) an den Sonnenkollektor (7) anschließbar ist.

5. Speicher-Wärmetauschervorrichtung (4) nach einem der Ansprüche 1 bis 4, **dadurch gekennzeichnet, dass** einer der Rohrleitungs-Wärmetauscher (20a, 20b, 20c) an das Brauchwassersystem anschließbar ist.

6. Speicher-Wärmetauschervorrichtung (4) nach einem der Ansprüche 1 bis 5, **dadurch gekennzeichnet, dass** die Kammern (5a, 5b, 5c) in Gebrauchslage vertikal übereinander angeordnet sind oder einen Winkel von (90°- α) zu der vertikalen Anordnung aufweisen, wobei α vorzugsweise kleiner als 90° und größer als 35° ist.

7. Speicher-Wärmetauschervorrichtung (4) nach einem der Ansprüche 1 bis 6, **dadurch gekennzeichnet, dass** die Kammern (5a, 5b, 5c) durch Trennwände (23) mit Öffnungen voneinander abgegrenzt sind und/oder räumlich voneinander getrennt sind und durch Rohrleitungen (6) in Fluidkommunikation miteinander stehen.

8. Speicher-Wärmetauschervorrichtung (4) nach einem der Ansprüche 1 bis 7, **dadurch gekennzeichnet, dass** die Rohrleitungs-Wärmetauscher (20a, 20b, 20c) in den einzelnen Kammern (5a, 5b, 5c) spiral- oder schraubenförmig ausgebildet und vorzugsweise konzentrisch zueinander angeordnet sind.

9. Speicher-Wärmetauschervorrichtung (4) nach Anspruch 8, **dadurch gekennzeichnet, dass** die Durchmesser der Spiral- oder Schraubenformen der drei konzentrisch zueinander angeordneten Rohrleitungs-Wärmetauscher (20a, 20b, 20c) unterschiedlich groß sind.

10. Speicher-Wärmetauschervorrichtung (4) nach einem der Ansprüche 1 bis 9, wobei einer der Rohrleitungs-Wärmetauscher (20a, 20b, 20c) an das Brauchwassersystem anschließbar ist, **dadurch gekennzeichnet, dass** dieser Rohrleitungs-Wärmetauscher über ein T-Stück zusätzlich an einen Zirkulationskreislauf anschließbar ist.

11. Speicher-Wärmetauschervorrichtung (4) nach einem der Ansprüche 1 bis 10, **dadurch gekennzeichnet, dass** die Kammern (5a, 5b, 5c) eine runde oder eine quadratische Querschnittsform aufweisen.

12. Speicher-Wärmetauschervorrichtung (4) nach einem der Ansprüche 1 bis 11, **dadurch gekennzeichnet, dass** das Kammersystem zumindest bereichsweise mit einem wärmeisolierenden Material (22) ummantelt ist.

13. Mobile Wassertemperiereinheit (1) zur Versorgung eines Gebäudes mit warmem Heizungs- und Brauchwasser, **dadurch gekennzeichnet, dass** die mobile Wassertemperiereinheit (1) eine Speicher-Wärmetauschervorrichtung (4) nach einem der Ansprüche 1 bis 12 umfasst.

14. Verfahren zum Austausch von Wärmeenergie zwischen einer Wärmepumpe, einem Sonnenkollektor (7), einem Heizungswasser- und einem Brauchwassersystem mit einer Speicher-Wärmetauschervorrichtung (4) nach einem der Ansprüche 1 bis 13, **dadurch gekennzeichnet, dass**
- in einem ersten Verfahrensschritt das Kammersystem an das Heizungswassersystem, einer der Rohrleitungs-Wärmetauscher (20a, 20b, 20c) an den Sonnenkollektor (7), ein weiterer der Rohrleitungs-Wärmetauscher (20a, 20b, 20c) an das Brauchwassersystem und der letzte der Rohrleitungs-Wärmetauscher (20a, 20b, 20c) an die Wärmepumpe angeschlossen wird und
- in einem zweiten Verfahrensschritt die beiden Rohrleitungs-Wärmetauscher, die an den Sonnenkollektor (7) und das Brauchwassersystem angeschlossen sind, gegenläufig durchströmt werden und der Rohrleitungs-Wärmetauscher, der an die Wärmepumpe angeschlossen ist, von einem Kältemittel durchströmt wird.

15. Verfahren nach Anspruch 14, **dadurch gekennzeichnet, dass** der Rohrleitungs-Wärmetauscher, der an das Brauchwassersystem angeschlossen ist, zusätzlich über ein T-Stück an einen zirkulationskreislauf angeschlossen wird.

16. Verfahren nach Anspruche 14 oder 15, **dadurch gekennzeichnet, dass** sich in den Kammern (5a, 5b, 5c) im Betriebszustand unterschiedlich große Temperaturen einstellen.

17. Verfahren nach Anspruch 16, wobei das Kammersystem aus drei Kammern (5a, 5b, 5c) besteht und die Kammern (5a, 5b, 5c) in Gebrauchslage vertikal übereinander angeordnet sind oder einen Winkel von (90°-α) zu der vertikalen Anordnung aufweisen und α kleiner als 90° und größer als 35° ist, **dadurch gekennzeichnet, dass** die Temperatur in der oberen Kammer (5a) am größten ist, die Temperatur in der unteren Kammer (5c) am kleinsten ist und die Temperatur in der mittleren Kammer (5b) einen dazwischen liegenden Wert annimmt.

18. Verfahren nach Anspruch 17, **dadurch gekennzeichnet, dass**
- die Temperatur in der oberen Kammer (5a) zwischen 35°C und 70°C,
- die Temperatur in der mittleren Kammer (5b) zwischen 25°C und 50°C, und/oder
- die Temperatur in der unteren Kammer (5c) zwischen 15°C und 40°C liegt.
